# DEMANDE DE BREVET EUROPEEN

(11) **EP 3 760 479 A1**
(43) Date de publication de la demande: **06.01.2021**
(21) Numéro de dépôt: 20183813.3
(22) Date de dépôt: 02.07.2020
(51) Int. Cl.: B60N 2/815, B60N 2/818, B60N 2/894

(54) **APPUI-TÊTE DE SIÈGE DE VÉHICULE AUTOMOBILE**

(30) Priorité: 02.07.2019 FR 1907299
(71) Demandeur: TESCA France, 75008 Paris (FR)
(72) Inventeur: GEORGES, Laurent, 08190 Roizy (FR)
(74) Mandataire: Sayettat, Julien Christian

(57) **Abrégé**

L'invention concerne un appui-tête (1) de siège de véhicule automobile, dont le dispositif de verrouillage du boitier (4) sur des crans (3) comprend au moins une épingle (5), à base d'un fil en métal à ressort, présentant une partie d'ancrage (6) sur ledit boitier et une partie mobile (7) pouvant passer réversiblement d'une configuration de verrouillage, où elle coopère avec un desdits crans, à une configuration de déverrouillage, où elle ne coopère pas avec lesdits crans, ladite partie mobile comprend successivement, à partir de son extrémité libre : une zone d'actionnement (9) ; une zone d'engagement (10) dans ledit cran ; et une première zone de flexion (11) s'étendant essentiellement longitudinalement, ladite première zone se raccordant à ladite partie d'ancrage par une deuxième zone de flexion (14) s'étendant essentiellement transversalement et une zone de liaison (17) entre ladite primière zone et ladite deuxième zone, de sorte que ladite partie mobile présente une longueur développée additionnelle (19).

## Description

Il est connu de réaliser un appui-tête de siège de véhicule automobile, ledit appui-tête comprenant :
- deux tiges métalliques parallèles destinées à être montées en haut de dossier dudit siège, au moins une desdites tiges étant pourvue de crans de verrouillage débouchant latéralement,
- un boitier en matériau plastique moulé d'absorption d'énergie lors d'un choc de la tête d'un passager sur ledit appui-tête, ledit boitier étant monté en coulissement sur lesdites tiges de manière à permettre son réglage en hauteur,
- un dispositif de verrouillage dudit boitier sur lesdits crans de manière à maintenir ledit boitier dans la position de réglage choisie,
ledit dispositif présentant les caractéristiques suivantes :
- il comprend au moins une épingle, à base d'un fil en métal à ressort, s'inscrivant dans un plan sensiblement horizontal, ladite épingle étant montée dans ledit boitier de manière à ne pas pouvoir débattre verticalement, ladite épingle présentant une partie d'ancrage sur ledit boitier et une partie mobile pouvant s'écarter angulairement de ladite partie d'ancrage autour d'un plan de liaison entre les deux, de manière à permettre de pouvoir passer réversiblement ladite partie mobile d'une configuration de verrouillage, où elle coopère avec un desdits crans, à une configuration de déverrouillage, où elle ne coopère pas avec lesdits crans,
- ladite partie mobile comprend successivement, à partir de son extrémité libre :
   ∘ une zone d'actionnement,
   ∘ une zone d'engagement dans ledit cran,
   ∘ et une zone de flexion s'étendant essentiellement longitudinalement,
- il comprend en outre une traverse transversale de déverrouillage montée en coulissement transversal dans ledit boitier de manière à pouvoir passer d'une position inactive à une position active, ladite traverse :
   ∘ prenant appui sur ladite zone d'actionnement pour mettre ladite partie mobile en configuration de déverrouillage quand ladite traverse est mise en position active,
   ∘ étant pourvue d'une extrémité coopérant avec un moyen d'actionnement pour l'amener en position active.

Le fait que les crans de verrouillage débouchent latéralement permet de renforcer l'efficacité du verrouillage en cas de choc de la tête d'un passager sur l'appui-tête.

Quand le moyen d'actionnement n'est pas activé, la traverse est ramenée en position inactive du fait de la nature élastique des épingles qui retrouvent leur géométrie initiale.

Un tel agencement peut toutefois présenter l'inconvénient qu'il faut appliquer une force importante sur le moyen d'actionnement pour amener la partie mobile en configuration de déverrouillage, ce qui peut s'avérer peu ergonomique.

Pour pallier cet inconvénient, on pourrait réaliser une première zone de longueur plus importante, mais cela peut s'avérer difficile sans augmenter la dimension longitudinale du boitier - c'est à dire son épaisseur - et donc l'encombrement de l'appui-tête.

L'invention a pour but de pallier cet inconvénient.

A cet effet, l'invention propose un appui-tête de siège de véhicule automobile, ledit appui-tête comprenant :
- deux tiges métalliques parallèles destinées à être montées en haut de dossier dudit siège, au moins une desdites tiges étant pourvue de crans de verrouillage débouchant latéralement,
- un boitier en matériau plastique moulé d'absorption d'énergie lors d'un choc de la tête d'un passager sur ledit appui-tête, ledit boitier étant monté en coulissement sur lesdites tiges de manière à permettre son réglage en hauteur,
- un dispositif de verrouillage dudit boitier sur lesdits crans de manière à maintenir ledit boitier dans la position de réglage choisie,
ledit dispositif présentant les caractéristiques suivantes :
- il comprend au moins une épingle, à base d'un fil en métal à ressort, s'inscrivant dans un plan sensiblement horizontal, ladite épingle étant montée dans ledit boitier de manière à ne pas pouvoir débattre verticalement, ladite épingle présentant une partie d'ancrage sur ledit boitier et une partie mobile pouvant s'écarter angulairement de ladite partie d'ancrage autour d'un plan de liaison entre les deux, de manière à permettre de pouvoir passer réversiblement ladite partie mobile d'une configuration de verrouillage, où elle coopère avec un desdits crans, à une configuration de déverrouillage, où elle ne coopère pas avec lesdits crans,
- ladite partie mobile comprend successivement, à partir de son extrémité libre :
   ∘ une zone d'actionnement,
   ∘ une zone d'engagement dans ledit cran,
   ∘ et une première zone de flexion s'étendant essentiellement longitudinalement,
- il comprend en outre une traverse transversale de déverrouillage montée en coulissement transversal dans ledit boitier de manière à pouvoir passer d'une position inactive à une position active, ladite traverse :
   ∘ prenant appui sur ladite zone d'actionnement pour mettre ladite partie mobile en configuration de déverrouillage quand ladite traverse est mise en position active,
   ∘ étant pourvue d'une extrémité coopérant avec un moyen d'actionnement pour l'amener en position active,
ledit appui-tête présentant en outre les caractéristiques suivantes :
- ladite première zone se raccorde à ladite partie d'ancrage par une deuxième zone de flexion s'étendant essentiellement transversalement, lesdites première et deuxième zones étant reliées l'une à l'autre par une zone de liaison s'étendant sensiblement selon un arc de cercle, de sorte que ladite partie mobile présente, au moyen de ladite deuxième zone et de ladite zone de liaison, une longueur développée additionnelle, s'étendant dudit plan de liaison à l'interface entre ladite première zone et ladite zone de liaison, de manière à minimiser l'effort à appliquer sur ledit moyen d'actionnement pour mettre ladite partie mobile en configuration de déverrouillage,
- ladite longueur additionnelle, mesurée le long de la nappe de fibres neutres de ladite épingle, est supérieure à 14 mm.

Dans cette description, les termes de positionnement dans l'espace (horizontal, vertical, haut, longitudinal, transversal, latéral, ...) sont pris en référence à l'appui-tête disposé en situation d'utilisation dans le véhicule.

On rappelle ici que, dans le cas d'une poutre soumise à une flexion, la partie la plus proche du centre de courbure (concave) subit une compression et la partie la plus éloignée (convexe) subit une traction. Les fibres qui composent la partie concave subissent un raccourcissement, les autres un allongement. On appelle nappe de fibres neutres la surface située au centre de la poutre et formée par les fibres qui ne subissent ni raccourcissement ni allongement mais seulement une flexion.

Par ailleurs, on précise ici que le plan de liaison entre la partie d'ancrage et la partie mobile se situe à l'endroit où l'épingle n'est plus emboitée dans le boitier, de manière à pouvoir débattre par rapport audit boitier.

Avec l'agencement proposé, comme précisé ci-dessus, la partie mobile présente, au moyen de ladite deuxième zone et de ladite zone de liaison, une longueur développée additionnelle qui ne requiert pas d'augmenter l'épaisseur du boitier, puisque le supplément de longueur est conféré transversalement.

Et cette longueur additionnelle permet de minimiser l'effort à appliquer sur le moyen d'actionnement pour mettre la partie mobile en configuration de déverrouillage.

D'autres particularités et avantages de l'invention apparaîtront dans la description qui suit, faite en référence aux figures jointes, dans lesquelles :

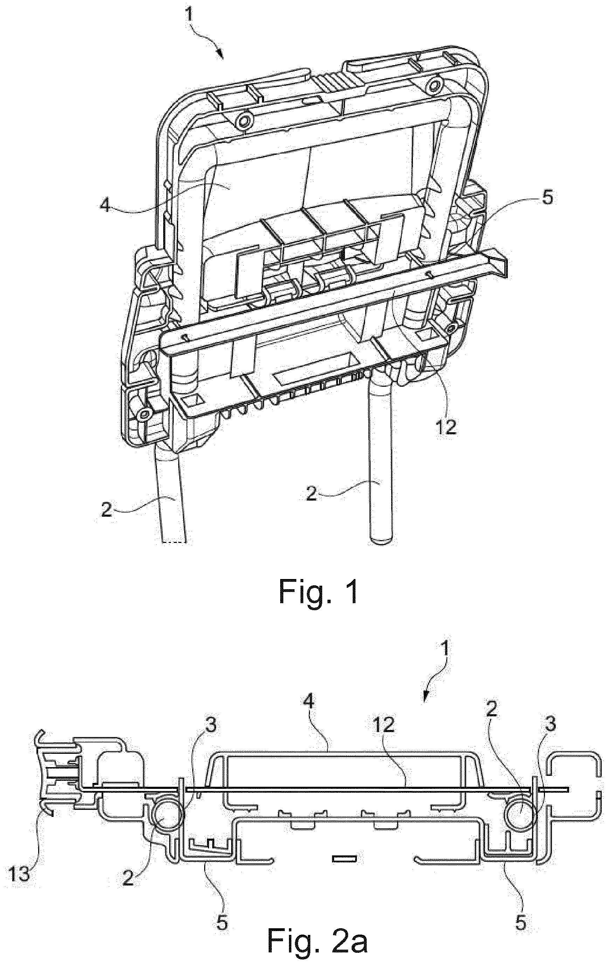

[Fig.1] est une vue schématique en perspective partielle d'un appui-tête selon une réalisation,

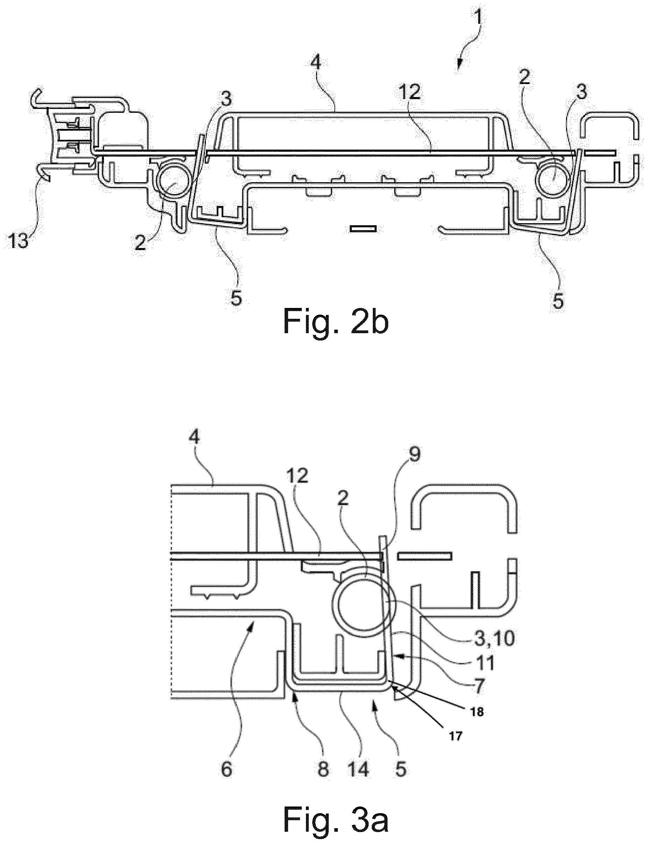

[Fig.2a] et [Fig.2b] sont des vues en coupe horizontale de l'appui-tête de la figure 1, la partie mobile de l'épingle étant en configuration de verrouillage (figure 2a) et de déverrouillage (figure 2b),

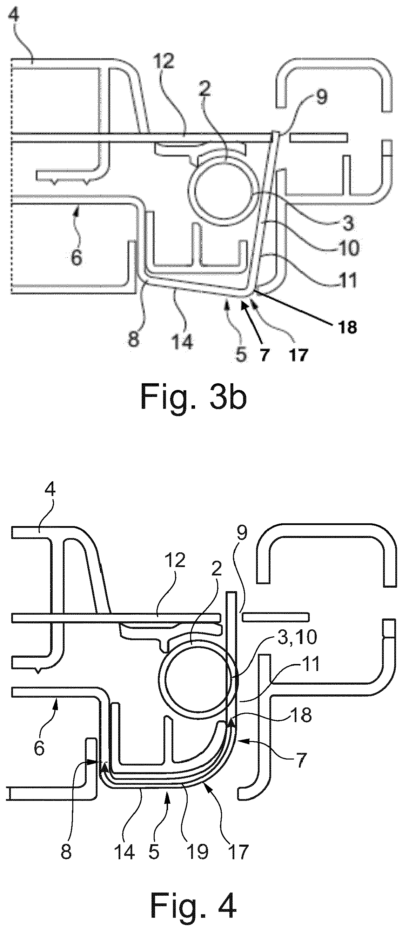

[Fig.3a] et [Fig.3b] sont respectivement des vues de détail des figures 2a et 2b,
[Fig.4] est analogue à la figure 3a selon une variante de réalisation dans laquelle la zone de liaison présente un rayon de courbure accentué,

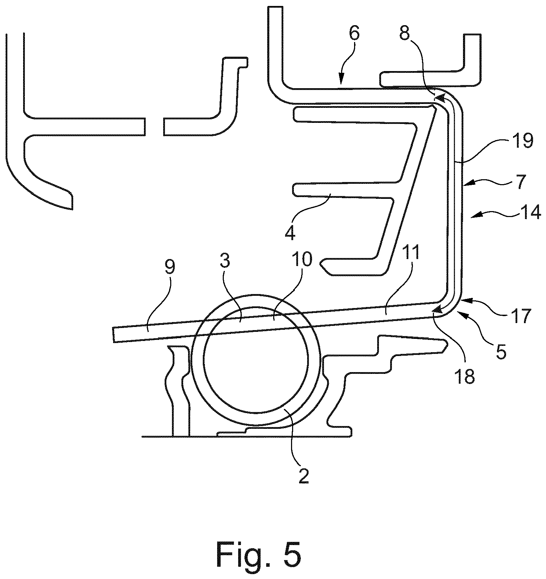

[Fig.5] est une vue schématique de détail d'une épingle analogue à celles présentées sur les figures 2 et 3, ladite épingle étant insérée dans son environnement partiellement représenté.

En référence aux figures, on décrit un appui-tête 1 de siège de véhicule automobile, ledit appui-tête comprenant :
- deux tiges 2 métalliques parallèles destinées à être montées en haut de dossier dudit siège, au moins une desdites tiges étant pourvue de crans 3 de verrouillage débouchant latéralement,
- un boitier 4 en matériau plastique moulé d'absorption d'énergie lors d'un choc de la tête d'un passager sur ledit appui-tête, ledit boitier étant monté en coulissement sur lesdites tiges de manière à permettre son réglage en hauteur,
- un dispositif de verrouillage dudit boitier sur lesdits crans de manière maintenir ledit boitier dans la position de réglage choisie,
ledit dispositif présentant les caractéristiques suivantes :
- il comprend au moins une épingle 5, à base d'un fil en métal à ressort, s'inscrivant dans un plan sensiblement horizontal, ladite épingle étant montée dans ledit boitier de manière à ne pas pouvoir débattre verticalement, ladite épingle présentant une partie d'ancrage 6 sur ledit boitier et une partie mobile 7 pouvant s'écarter angulairement de ladite partie d'ancrage autour d'un plan de liaison 8 entre les deux, de manière à permettre de pouvoir passer réversiblement ladite partie mobile d'une configuration de verrouillage, où elle coopère avec un desdits crans, à une configuration de déverrouillage, où elle ne coopère pas avec lesdits crans,
- ladite partie mobile comprend successivement, à partir de son extrémité libre :
   ∘ une zone d'actionnement 9,
   ∘ une zone d'engagement 10 dans ledit cran,
   ∘ et une première zone de flexion 11 s'étendant essentiellement longitudinalement,
- il comprend en outre une traverse 12 transversale de déverrouillage montée en coulissement transversal dans ledit boitier de manière à pouvoir passer d'une position inactive à une position active, ladite traverse :
   ∘ prenant appui sur ladite zone d'actionnement pour mettre ladite partie mobile en configuration de déverrouillage quand ladite traverse est mise en position active,
   ∘ étant pourvue d'une extrémité coopérant avec un moyen d'actionnement 13 pour l'amener en position active,
ledit appui-tête présentant en outre les caractéristiques suivantes :
- ladite première zone se raccorde à ladite partie d'ancrage par une deuxième zone de flexion 14 s'étendant essentiellement transversalement, lesdites première et deuxième zones étant reliées l'une à l'autre par une zone de liaison 17 s'étendant sensiblement selon un arc de cercle, de sorte que ladite partie mobile présente, au moyen de ladite deuxième zone et de ladite zone de liaison, une longueur développée additionnelle 19, s'étendant dudit plan de liaison à l'interface 18 entre ladite première zone et ladite zone de liaison, de manière à minimiser l'effort à appliquer sur ledit moyen d'actionnement pour mettre ladite partie mobile en configuration de déverrouillage,
- ladite longueur additionnelle, mesurée le long de la nappe de fibres neutres de ladite épingle, est supérieure à 14 mm.

Selon les réalisations représentées, la zone de liaison 17 s'étend selon un arc de cercle correspondant à un angle compris entre 65 et 115°, et notamment compris entre 80 et 100°.

Selon les réalisations représentées, la deuxième zone de flexion 14 s'étend sensiblement strictement transversalement.

On pourrait toutefois prévoir que la deuxième zone de flexion 14 présente une composante longitudinale, ladite zone se présentant par exemple sous la forme d'un segment présentant une inclinaison par rapport à la direction transversale.

Ceci étant, le terme « essentiellement » signifie que la composante transversale - c'est à dire la projection selon la direction transversale - de la deuxième zone de flexion 14 est de dimension supérieure à celle de sa composante longitudinale - c'est à dire sa projection selon la direction longitudinale.

Selon une réalisation, le fil de l'épingle 5 présente les caractéristiques suivantes, lesdites caractéristiques étant soit au moins en partie cumulatives, soit indépendantes :
- matière : EN10270-1 SH Zn Al
- diamètre = 1,5+/-0,11 mm,
- résistance à la rupture (RM) = 2060 à 2290 N/mm²
- module de Young (RE) = 1648 à 1832 N/mm²

Selon les réalisations représentées :
- la première zone 11 est sous forme d'un segment sensiblement rectiligne s'étendant essentiellement longitudinalement,
- la deuxième zone 14 est sous forme d'un segment sensiblement rectiligne s'étendant essentiellement transversalement.

On précise que le terme « essentiellement » est toujours à considérer selon l'acception explicitée plus haut.

Selon la réalisation représentée, les deux tiges 2 sont pourvues de crans 3 de verrouillage débouchant latéralement, le dispositif de verrouillage comprenant deux épingles 5 destinées à coopérer avec chacune desdites tiges, lesdites épingles étant toutes deux actionnables en déverrouillage par la traverse 12.

Selon la réalisation représentée, les épingles 5 sont intégrées à un fil métallique unique.

Selon la réalisation représentée, le moyen d'actionnement 13 est sous la forme d'un bouton-poussoir.

## Revendications

1. Appui-tête (1) de siège de véhicule automobile, ledit appui-tête comprenant :
• deux tiges (2) métalliques parallèles destinées à être montées en haut de dossier dudit siège, au moins une desdites tiges étant pourvue de crans (3) de verrouillage débouchant latéralement,
• un boitier (4) en matériau plastique moulé d'absorption d'énergie lors d'un choc de la tête d'un passager sur ledit appui-tête, ledit boitier étant monté en coulissement sur lesdites tiges de manière à permettre son réglage en hauteur,
• un dispositif de verrouillage dudit boitier sur lesdits crans de manière à maintenir ledit boitier dans la position de réglage choisie,
ledit dispositif présentant les caractéristiques suivantes :
• il comprend au moins une épingle (5), à base d'un fil en métal à ressort, s'inscrivant dans un plan sensiblement horizontal, ladite épingle étant montée dans ledit boitier de manière à ne pas pouvoir débattre verticalement, ladite épingle présentant une partie d'ancrage (6) sur ledit boitier et une partie mobile (7) pouvant s'écarter angulairement de ladite partie d'ancrage autour d'un plan de liaison (8) entre les deux, de manière à permettre de pouvoir passer réversiblement ladite partie mobile d'une configuration de verrouillage, où elle coopère avec un desdits crans, à une configuration de déverrouillage, où elle ne coopère pas avec lesdits crans,
• ladite partie mobile comprend successivement, à partir de son extrémité libre :
∘ une zone d'actionnement (9),
∘ une zone d'engagement (10) dans ledit cran,
∘ et une première zone de flexion (11) s'étendant essentiellement longitudinalement,
• il comprend en outre une traverse (12) transversale de déverrouillage montée en coulissement transversal dans ledit boitier de manière à pouvoir passer d'une position inactive à une position active, ladite traverse :
∘ prenant appui sur ladite zone d'actionnement pour mettre ladite partie mobile en configuration de déverrouillage quand ladite traverse est mise en position active,
∘ étant pourvue d'une extrémité coopérant avec un moyen d'actionnement (13) pour l'amener en position active,
ledit appui-tête étant **caractérisé en ce que** :
• ladite première zone se raccorde à ladite partie d'ancrage par une deuxième zone de flexion (14) s'étendant essentiellement transversalement, lesdites première et deuxième zones étant reliées l'une à l'autre par une zone de liaison (17) s'étendant sensiblement selon un arc de cercle, de sorte que ladite partie mobile présente, au moyen de ladite deuxième zone et de ladite zone de liaison, une longueur développée additionnelle (19), s'étendant dudit plan de liaison à l'interface (18) entre ladite première zone et ladite zone de liaison, de manière à minimiser l'effort à appliquer sur ledit moyen d'actionnement pour mettre ladite partie mobile en configuration de déverrouillage,
• ladite longueur additionnelle, mesurée le long de la nappe de fibres neutres de ladite épingle, est supérieure à 14 mm.

2. Appui-tête selon la revendication 1, **caractérisé en ce que** le fil de l'épingle (5) présente un diamètre égal à 1,5+/-0,11 mm.

3. Appui-tête selon l'une des revendications 1 ou 2, **caractérisé en ce que** :
• la première zone (11) est sous forme d'un segment sensiblement rectiligne s'étendant essentiellement longitudinalement,
• la deuxième zone (14) est sous forme d'un segment sensiblement rectiligne s'étendant essentiellement transversalement.

4. Appui-tête selon l'une quelconque des revendications 1 à 3, **caractérisé en ce que** les deux tiges (2) sont pourvues de crans (3) de verrouillage débouchant latéralement, le dispositif de verrouillage comprenant deux épingles (5) destinées à coopérer avec chacune desdites tiges, lesdites épingles étant toutes deux actionnables en déverrouillage par la traverse (12).

5. Appui-tête selon la revendication 4, **caractérisé en ce que** les épingles (5) sont intégrées à un fil métallique unique.

6. Appui-tête selon l'une quelconque des revendications 1 à 5, **caractérisé en ce que** le moyen d'actionnement (13) est sous la forme d'un bouton-poussoir.
